# EUROPÄISCHE PATENTSCHRIFT

(11) **EP 2 682 172 B1**
(45) Veröffentlichungstag und Bekanntmachung des Hinweises auf die Patenterteilung: **30.06.2021**
(21) Anmeldenummer: 13004742.6
(22) Anmeldetag: 18.12.2008
(51) Int. Cl.: B01D 35/027, B01D 19/00, B01D 29/23, B01D 35/147, B01D 35/06, B01D 29/60

(54) **FLUID-VORRATSTANK MIT EINER FILTERVORRICHTUNG**
FLUID TANK WITH A FILTER APPARATUS
RESERVOIR DE LIQUIDE AVEC UN DISPOSITIF DE FILTRATION

(30) Priorität: 04.03.2008 DE 102008012521
(43) Veröffentlichungstag der Anmeldung: 08.01.2014
(62) Teilanmeldung aus: 08873163.3
(73) Patentinhaber: RT-Filtertechnik Gmbh, 88048 Friedrichshafen (DE)
(72) Erfinder: Müller, Günther, 88682 Salem (DE); Stehle, Gerhard, 78467 Konstanz (DE); Wozniak, Sven, 78467 Konstanz (DE)
(74) Vertreter: Bartels und Partner, Patentanwälte

(56) Entgegenhaltungen:
- EP-B1- 1 419 807
- DE-A1- 2 948 868
- DE-A1- 19 719 135
- DE-U1- 9 301 562
- US-A- 4 401 563
- US-A- 5 759 393
- US-A- 5 904 847
- US-A1- 2005 029 171

## Beschreibung

Die Erfindung betrifft einen Fluid-Vorratstank mit einer Filtervorrichtung. Dahingehende Lösungen werden fachsprachlich auch mit Intank-Lösung bezeichnet.

Durch die EP 1 419 807 B1 ist eine Intank-Filtervorrichtung bekannt, mit einem auswechselbaren Filterelement, das in einen Vorratstank für Flüssigkeiten, insbesondere in Form von Hydraulikflüssigkeit, aufnehmbar ist und eine Schmutzseite von einer Reinseite des Tanks trennt. Ferner ist die bekannte Lösung mit einer das Filterelement abnehmbar haltenden Aufnahme versehen, die einen zur Reinseite des Tanks führenden Durchgang für gefiltertes Fluid aufweist, wobei ein Rückhalteelement vorgesehen ist, das einen möglichen Durchtritt von Fremdkörpern durch die Öffnung des Durchganges zur Reinseite des Behältnisses verhindert. Als Rückhalteelement dient bei der bekannten Lösung ein Kegel, dessen Mantelfläche durchbrochen ist, so dass beim Auswechseln des Filterelementes ein möglicher Durchtritt von Fremdkörpern auf die Tank-Reinseite verhindert ist und dennoch im Element befindliches Fluid ablaufen kann, sofern dieses gegen ein Neuelement getauscht wird. Das jeweils eingesetzte Filterelement weist eine plissierte Filtermatte auf, die hinter der jeweils vorgesehenen Durchströmungsrichtung von einem Stützrohrmantel abgestützt ist.

Eine vergleichbare Intank-Lösung ist auch in der DE 10 2004 014 149 B4 aufgezeigt, wobei auch die dahingehend bekannte Filtervorrichtung mindestens ein Filterelement mit plissierter Filtermatte aufweist, das in einem Filtergehäuse aufnehmbar ist, das über Fluidanschlüsse mit einer Fluideinrichtung, insbesondere in Form eines Hydraulik-Vorratstanks, mittels einer Anschlusseinrichtung fluidführend verbindbar und an der Fluideinrichtung mittels einer Befestigungseinrichtung lösbar anbringbar ist. Als Befestigungseinrichtung ist ein durch Verdrehen des Filtergehäuses verriegelbarer und lösbarer Bajonettverschluss vorgesehen, wobei die Anschlusseinrichtung mit mindestens einem bewegbaren Sperrteil versehen ist in der Art eines drehbar gelagerten Drehschiebers, das in einer Sperrstellung den ihm jeweils zuordenbaren Fluidanschluss sperrt und nach Bewegen in eine Öffnungsstellung für den Fluiddurchtritt diesen freigibt.

Bei der Filtration mit dahingehenden Intank-Filtervorrichtungen kommt es grundsätzlich, insbesondere bei hohen Arbeitsdrücken und/oder großen Fluidmengen, beim Durchtritt des abzureinigenden Fluids durch das jeweilige Filterelement zum Spritzen und zur Schaumbildung, letzteres bedingt durch Gasblasen, insbesondere gebildet aus Luft, die regelmäßig im vorangehenden hydraulischen Arbeitskreis in das Fluid, insbesondere in Form von Hydrauliköl, gelangen können, was insbesondere der Fall ist, wenn dahingehende Filtervorrichtungen für mobile Maschinen zum Einsatz kommen, wie beispielsweise Bagger, Rad- oder Teleskoplader etc., die umfänglich mit einer Arbeitshydraulik versehen sind, beispielsweise in Form von mittels Pumpen ansteuerbarer und versorgbarer Hydraulikzylinder. Um zu vermeiden, dass bei den bekannten Lösungen das aus dem Filterelement herausspritzende und schaumbildende Fluid in unmittelbaren Kontakt kommt mit der sonstigen Fluid- oder Ölmenge im Vorratstank, sind die Filterelemente in entsprechenden Umfassungsgehäusen innerhalb des Tanks gekammert, die jeweils eine Art Vorberuhigungsraum oder Vorkammer bilden, in denen das abgereinigte Fluid zur Ruhe kommen kann und etwaige Gasblasen nach oben hin auftriebsbedingt austreten können. Die genannten Beruhigungskammern nehmen aber innerhalb des eigentlichen Tankvolumens relativ viel Bauraum ein und führen letztendlich somit auch zu groß aufbauenden Vorratstanks als Ganzes und insbesondere bei hohen Arbeitsdrücken und/oder sehr großen Mengen an zu filtrierendem Fluid genügen die Vorkammervolumen regelmäßig nicht, in ausreichendem Maße eine Beruhigung des Öls vor Abgabe in den eigentlichen Vorratstank zu bewerkstelligen.

Die DE 29 48 868 A1 beschreibt einen Fluid-Vorratstank mit einer Filtervorrichtung, die in den Fluid-Vorratstank eingebaut ist, mit mindestens einem austauschbaren Filterelement, das im Wesentlichen eine Art Kreiszylinder ausbildet, das von innen nach außen von einem Fluid durchströmbar ist, das eine Filtermatte aufweist und das jeweils unter Beibehalten eines vorgebbaren Radialabstandes und unter Bildung eines Fluidströmungsraumes von einer Gehäusewand eines Gehäuses umgeben ist, die mehrere Durchlassstellen aufweist, von denen ein Teil unterhalb eines jeweiligen veränderbaren Fluidniveaus im Vorratstank angeordnet ist, wobei das Gehäuse an seiner Unterseite von einem Bodenteil beschlossen ist und an seiner Oberseite eine flanschartige Verbreiterung aufweist, mit der sich die Filtervorrichtung in diesem Bereich an der Oberseite einer oberen Tankwand des Fluid-Vorratstanks abstützt, wobei außenumfangsseitig zur Filtermatte mit Stützrohr Haltestäbe angeordnet sind, die jeweils mit ihrem unteren Ende unter die Unterseite des Bodenteils hervorragend, in diesem Bereich über eine Gewindemutter verschraubt sind, wobei das obere Ende des jeweiligen Haltestabes über ein entsprechendes Innengewinde in die flanschartige Verbreiterung eingedreht ist, und wobei dergestalt unter einer vorgegebenen Vorspannung die Gehäusewand zwischen der Verbreiterung und dem Bodenteil festgelegt ist.

Durch US 2005/00291 71 A1 ist eine Filtervorrichtung, die einen Fluid-Vorratstank eingebaut ist, bekannt mit mindestens einem austauschbaren Filterelement, das im Wesentlichen eine Art Kreiszylinder ausbildet und das von innen nach außen von einem Fluid durchströmt ist, das eine Filtermatte aufweist, die zur Aussteifung nach außen hin von einem Durchlassöffnungen aufweisenden Stützrohr oder Stützmantel umfasst ist, und das jeweils unter Beibehalten eines vorgebbaren Radialabstandes und unter Bildung eines Fluidströmungsraumes von einer Gehäusewand eines Gehäuses umgeben ist, die mehrere Durchlassstellen aufweist, von denen ein Teil unterhalb eines jeweiligen veränderbaren Fluidniveaus im Vorratstank und der andere Teil oberhalb dieses Fluidniveaus angeordnet ist, wobei das Gehäuse an seiner Unterseite von einem Bodenteil geschlossen ist und an seiner Oberseite eine flanschartige Verbreiterung aufweist, mit der sich die Filtervorrichtung in diesem Bereich an der Oberseite einer oberen Tankwand des Fluid-Vorratstanks abstützt.

Ausgehend von diesem Stand der Technik liegt der Erfindung die Aufgabe zugrunde, die bekannten Lösungen dahingehend weiter zu verbessern, dass sie uneingeschränkt auch für mobile Anwendungen zum Einsatz kommen können und dass unter Beibehalten der Vorteile einer sehr guten Abreinigung des Fluids eine bauraumsparende und kostengünstige Lösung zur Verfügung gestellt ist, mit der auch bei hohen Drücken und/oder sehr großen Mengen von Fluid die problemlose Weitergabe an einen Vorratstank beherrschbar ist.

Eine dahingehende Aufgabe löst eine Filtervorrichtung mit den Merkmalen des Patentanspruches 1.

Gemäß Anspruch 1 ist ein Fluid-Vorratstank mit einer Filtervorrichtung vorgesehen, die in den Fluid-Vorratstank eingebaut ist, mit mindestens einem austauschbaren Filterelement, das im Wesentlichen eine Art Kreiszylinder ausbildet, das von innen nach außen von einem Fluid durchströmbar ist, das eine Filtermatte aufweist, die zur Aussteifung nach außen hin von einem Durchlassöffnungen aufweisenden Stützrohr oder Stützmantel umfasst ist, und das jeweils unter Beibehalten eines vorgebbaren Radialabstandes und unter Bildung eines Fluidströmungsraumes von einer Gehäusewand eines Gehäuses umgeben ist, die mehrere Durchlassstellen aufweist, von denen ein Teil unterhalb eines jeweiligen veränderbaren Fluidniveaus im Vorratstank und der andere Teil oberhalb dieses Fluidniveaus angeordnet ist, wobei das Gehäuse an seiner Unterseite von einem Bodenteil beschlossen ist und an seiner Oberseite eine flanschartige Verbreiterung aufweist, mit der sich die Filtervorrichtung in diesem Bereich an der Oberseite einer oberen Tankwand des Fluid-Vorratstanks abstützt, wobei außenumfangsseitig zur Filtermatte mit Stützrohr Haltestäbe angeordnet sind, die jeweils mit ihrem unteren Ende unter die Unterseite des Bodenteils hervorragend, in diesem Bereich über eine Gewindemutter verschraubt sind, wobei das obere Ende des jeweiligen Haltestabes über ein entsprechendes Innengewinde in die flanschartige Verbreiterung eingedreht ist, und wobei dergestalt unter einer vorgegebenen Vorspannung die Gehäusewand zwischen der Verbreiterung und dem Bodenteil festgelegt ist, wobei der Fluid-Vorratstank eine zugehörige Aufnahmewand zum Festlegen der Filtervorrichtung aufweist, wobei zwischen der oberen Tankwand und der Aufnahmewand ein Einlaufkanal für verschmutztes Fluid verläuft, welcher in fluidischer Verbindung mit der Innenseite des Filterelements steht, und wobei die Filtervorrichtung ein Deckelteil aufweist, welches eine absatzartige Verbreiterung aufweist, die auf der Oberseite der Aufnahmewand aufsteht, und welches den Ein- und Ausbau der Filtervorrichtung im Fluid-Vorratstank ermöglicht.

Dank dieser Anordnung strömt das in den Fluidströmungsraum eintretende, vom jeweiligen Filterelement gereinigte Fluid im Bereich des jeweiligen Fluidniveaus und oberhalb desselben in laminarer Weise über die zuordenbaren Durchlassstellen in den Vorratstank und die unerwünschte Spritz- oder Schaumbildung beim austretenden Fluid ist derart mit Sicherheit vermieden. Aufgrund der Druckdifferenz zwischen einströmendem, nicht gereinigten Fluid und abströmendem, gereinigtem Fluid kann letzteres im Fluidströmungsraum über das Fluidniveau im Tank angehoben werden bei gleichmäßiger Verteilung entlang der Innenseite der Gehäusewand mit den Durchlassstellen, wozu auch Kapillareffekte mit beitragen können, und der derart entstehende gleichmäßige Fluidfilm ermöglicht dann den spritz- und schaumfreien Austritt aus den genannten Durchlassstellen quer zu der Gehäusewand.

Sofern das im Fluidströmungsraum befindliche gereinigte Fluid etwaige Gasblasen, wie Luftblasen, aufweist, werden diese an die jeweilige Durchlassstelle mit abgegeben, die für eine fluidniveaunahe Abgabe innerhalb des Vorratstanks die Blasen sammelt und vorzugsweise für eine erleichterte Abgabe in ihrem Volumen vergrößert. Dergestalt erhalten die Gasblasen einen höheren Auftrieb und separieren sich leichter von der austretenden, gereinigten Fluidmenge, insbesondere derart, dass kein Schaum und keine Spritzbildung entsteht, die ansonsten wiederum die Einbindung von Gas oder Luft in die austretende Fluidmenge begünstigen würden. Sofern die Fluidmenge innerhalb des Vorratstanks im Wesentlichen entgast ist, kann bei einer entsprechenden Fluidentnahme und Weitergabe an die Arbeitshydraulik es zu keinen Gasblasen bedingten Ausfällen kommen und Schädigungen der Arbeitshydraulik im Betrieb sind mit Sicherheit vermieden. Durch das homogene Austrittsverhalten werden auch gegebenenfalls noch im Tank befindliche Schwebstoffteile nicht aufgewirbelt und auf aufwendige Vorruhekammern im Tank, die im übrigen auch Bauraum einnehmen, kann vollständig verzichtet werden.

Weitere vorteilhafte Ausführungsform des erfindungsgemäßen Fluid-Vorratstanks sind Gegenstand der sonstigen Unteransprüche.

Im Folgenden wird die erfindungsgemäße Lösung anhand verschiedener Ausführungsbeispiele nach der Zeichnung näher erläutert. Dabei zeigen in prinzipieller und nicht maßstäblicher Weise die
- Fig. 1: einen Längsschnitt durch ein erstes Ausführungsbeispiel der Filtervorrichtung;
- Fig. 1A: eine der Fig. 1 entsprechende Darstellung, jedoch in einer anderen Schnittebene gezeichnet; und
- Fig. 2: eine perspektivische Außenansicht der Filtervorrichtung nach der Fig. 1.

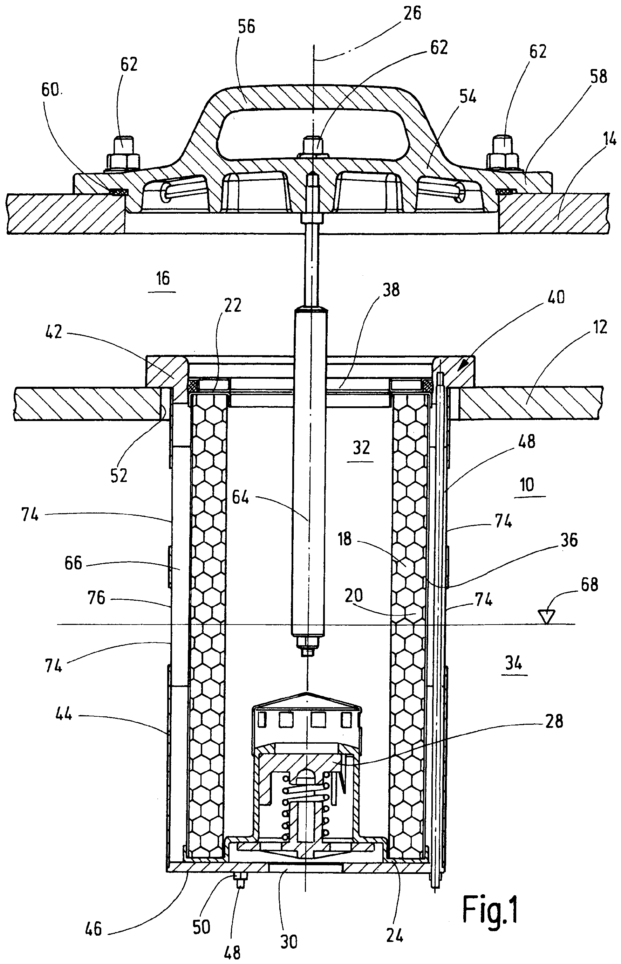

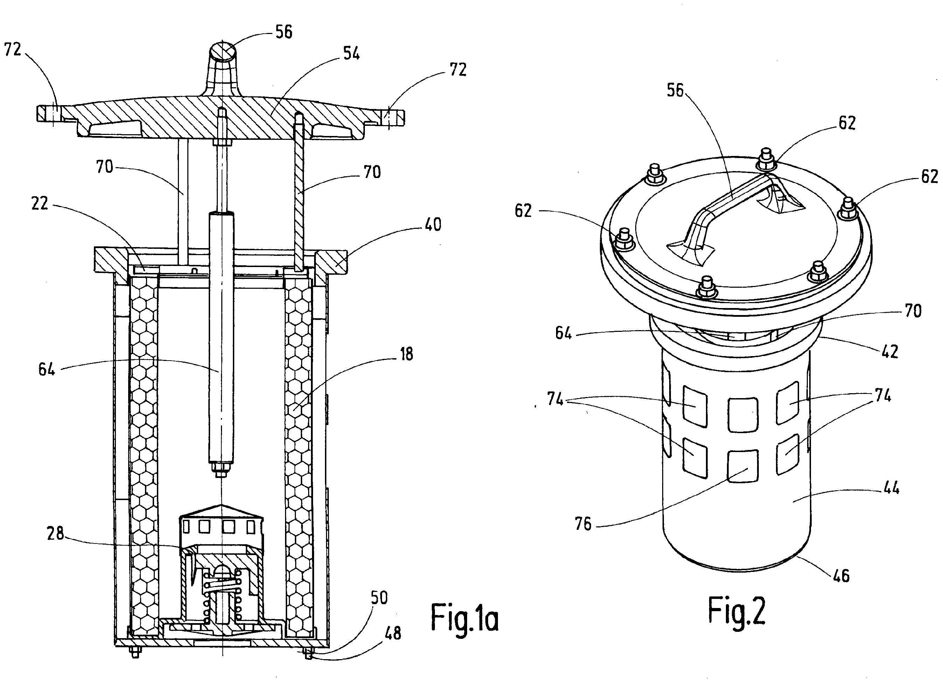

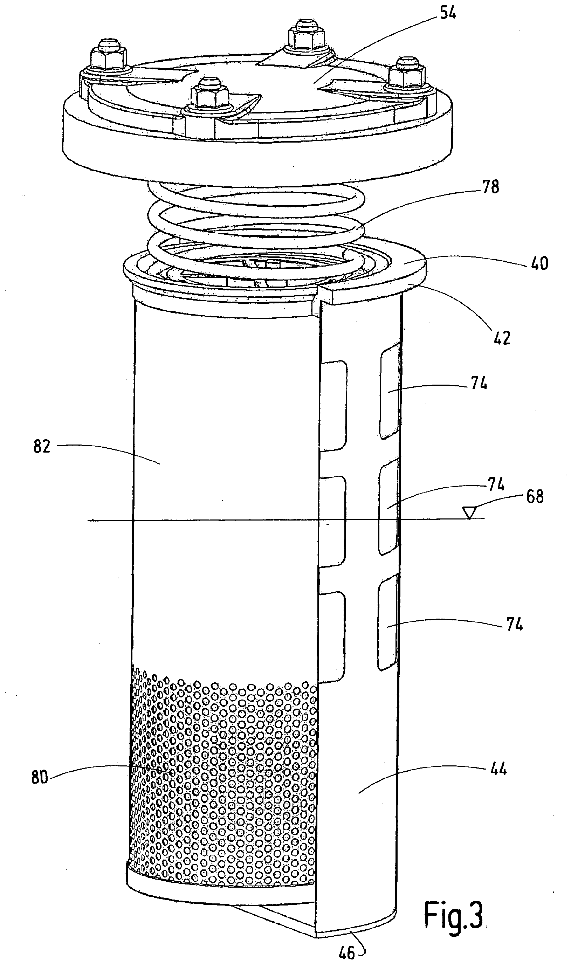

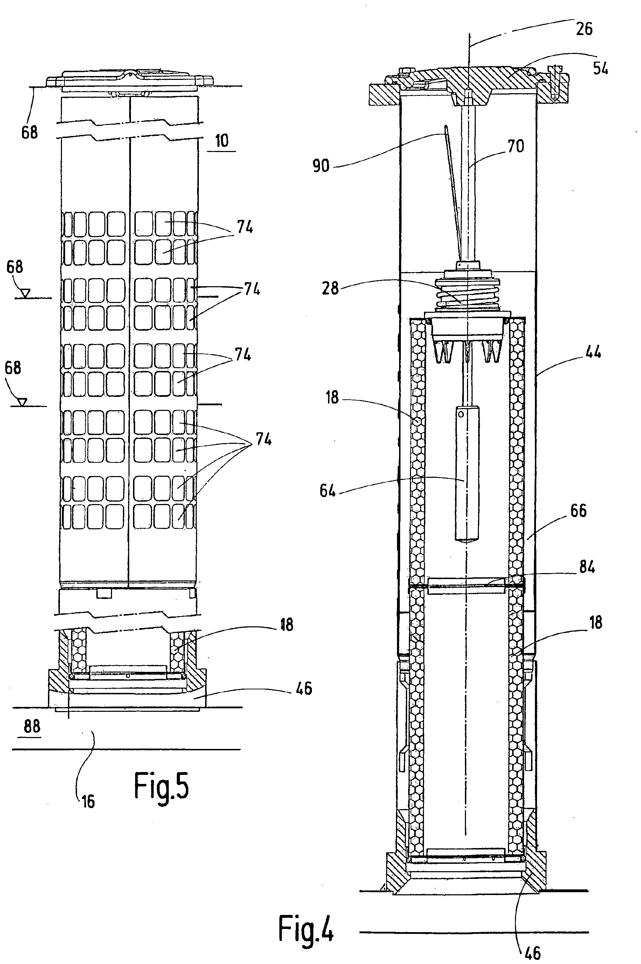

Die in der Fig. 1 gezeigte Filtervorrichtung dient dem Einbau in einen behälterartigen Fluidvorratstank 10, vergleichbar zu der Einbausituation nach der EP 1 419 807 B1. Von dem Fluidvorratstank 10 ist gemäß Darstellung nach der Fig. 1 nur die obere Tankwand 12 gezeichnet, sowie eine zugehörige Aufnahmewand 14 zum Festlegen der Filtervorrichtung. Zwischen diesen Wandabschnitten 12,14 verläuft ein Einlaufkanal 16 für verschmutztes Fluid, wie es beispielsweise aus dem Hydraulikkreis einer nicht näher dargestellten Arbeitshydraulik einer Baumaschine oder dergleichen stammt.

Die Filtervorrichtung weist des Weiteren ein Filterelement 18 auf mit vorzugsweise plissierter Filtermatte 20. Ansonsten bildet das Filterelement 18 im Wesentlichen eine Art Kreiszylinder aus. Die Filtermatte 20 ist zwischen einer oberen Endkappe 22 und einer unteren Endkappe 24 als Teile des Filterelementes 18 geführt. Die untere Endkappe 24 weist mittig und koaxial zur Längsachse 26 der Filtervorrichtung verlaufend ein an sich übliches Bypassventil 28 auf, das bei von Verschmutzungen zugesetzter Filtermatte 20 öffnet und unter Umgehung der Filtermatte 20 das Fluid ungereinigt über eine untere Bypassöffnung 30 in den Vorratstank 10 abströmen lässt. Da die Filtermatte 20 von innen nach außen durchströmt wird, also die Durchströmung von der Innenseite 32 des Filterelementes 18 in Richtung des Inneren 34 des Fluidvorratstanks erfolgt, ist die Filtermatte 20 zur Aussteifung nach außen hin von einem Stützrohr oder Stützmantel 36 umfasst, wobei das Stützrohr 36 vorzugsweise kreiszylindrisch ausgebildet ist und entsprechende, nicht näher dargestellte Durchlassöffnungen aufweist für den Durchtritt des mittels der Filtermatte 20 abgereinigten Fluids. Ein entsprechend geformter Stützmantel (nicht dargestellt) könnte aber auch der Außenkontur der plissierten Filtermatte nachfolgen und insofern zur Erhöhung der Druckstabilität des Elementes nach außen die Abstützung vornehmen. Auch der dahingehende Stützmantel verfügt über entsprechende Durchlassöffnungen für das Fluidmedium. Der Fluideintritt des ungereinigten Fluids, vom Einlaufkanal 16 kommend, erfolgt über die obere Eintrittsöffnung 38 des Filterelementes in Richtung der genannten Innenseite 32 desselben.

Das Filterelement 18 ist in einem als Ganzes mit 40 bezeichneten Gehäuse aufgenommen, das an seiner Oberseite eine flanschartige Verbreiterung 42 aufweist, mit der sich die Filtervorrichtung in diesem Bereich an der Oberseite der oberen Tankwand 12 abstützt. An die genannte Verbreiterung 42 schließt sich nach unten hin eine zylindrische Gehäusewand 44 an, die zu ihrer Unterseite 46 hin geschlossen ausgebildet ist, bis auf die genannte Bypassöffnung 30. Vorzugsweise bildet die dahingehende Unterseite 46 der Gehäusewand 44 ein eigenständiges Bodenteil aus und die Gehäusewand 44 stützt sich mit ihrem jeweils freien Ende an einer absatzartigen Stufe des Bodenteils 46 ab sowie an der flanschartigen Verbreiterung 42. Damit der beschriebene Verbund des Gehäuses 40 in der in der Fig. 1 gezeigten Zusammenbaulage verbleibt, sind außenumfangsseitig zur Filtermatte 20 mit Stützrohr 36 Haltestäbe 48 angeordnet, von denen in der Fig. 1 nur ein Haltestab 48 ganz gezeigt ist und von den beiden anderen dahingehend eingesetzten Haltestäben 48 ist in der Fig. 1 nur ein weiterer Stab 48 der Einfachheit halber mit seinem unteren Abschlussende gezeigt, das insoweit unter die Unterseite des Bodenteils 46 hervorragt. In diesem Bereich ist der jeweilige Haltestab 48 über eine Gewindemutter 50 verschraubt und das obere Ende des jeweiligen Haltestabes 48 ist über ein entsprechendes Innengewinde in die flanschartige Verbreiterung 42 eingedreht. Dergestalt kann unter einer vorgegebenen Vorspannung die Gehäusewand 44 zwischen Verbreiterung 42 und Bodenteil 46 festgelegt werden.

Damit das Gehäuse 40 in die obere Tankwand 12 einsetzbar ist, ist in diese eine entsprechende kreiszylindrische Ausnehmung 52 eingebracht, deren Durchmesser jedenfalls größer ist als der Außendurchmesser im Bereich des Überganges zwischen der flanschartigen Verbreiterung 42 und dem Außenumfang der Gehäusewand 44. Ferner ist ein Deckelteil 54 als Teil der Filtervorrichtung vorhanden mit einem Handgriff 56 für den erleichterten Ein- und Ausbau der Filtervorrichtung in den gezeigten Tank 10. Das Deckelteil 54 weist eine absatzartige Verbreiterung 58 auf, die auf der Oberseite der Aufnahmewand 14 aufsteht und ein Absatz der Verbreiterung 58 greift in den freien Innendurchmesser der Aufnahmewand 14 unter Anlage an dieselbe ein. Zur Fluidabdichtung dient in diesem Bereich ein ringförmiges Dichtelement 60 üblicher Bauart. Wie insbesondere die Fig. 2 zeigt, sind diametral zur Längsachse 26 der Vorrichtung einander gegenüberliegend Festlegeschrauben 62 vorhanden, die dem Festlegen des Deckelteils 54 an der Aufnahmewand 14 dienen. Nach Lösen der Schrauben 62 lässt sich die Filtervorrichtung aus dem Tank 10 ausbauen und in umgekehrten Montageabfolge wieder einbauen. Die dahingehenden Montagevorgänge sind notwendig, sofern ein verbrauchtes Filterelement 18 gegen ein Neuelement zu tauschen ist.

Konzentrisch zur Längsachse 26 verläuft ein Magnetstab 64, der insbesondere die Funktion eines Permanentmagneten hat und der in Blickrichtung auf die Fig. 1 gesehen mit seinem oberen Ende im Deckelteil 54 festgelegt, insbesondere dort eingeschraubt ist und mit seinem anderen gegenüberliegenden freien Ende durchgreift er die Innenseite 32 des Filterelementes 18. Der dahingehende Magnetstab 64 erlaubt eine Abscheidung von magnetisierbaren Metallbestandteilen im zu filternden Fluid. Sowohl Magnetstab 64 als auch Bypassventil 28 sind optional und für die Funktion der Filtervorrichtung als Ganzes nicht zwingend vorzusehen.

Wie die Fig. 1 des Weiteren zeigt, nimmt die zylindrische Gehäusewand 44 einen vorgebbaren Radialabstand zu der Außenumfangsfläche des Filterelementes 18 ein, so dass insoweit ein Fluidströmungsraum 66 gebildet ist. Der dahingehende Fluidströmungsraum 66 erstreckt sich parallel zur Außenumfangsfläche des Filterelementes 18, insbesondere erstreckt er sich in axialer Längsrichtung parallel zur Längsachse 26 der Vorrichtung zwischen der Oberseite des Bodenteils 46 und der Unterseite der flanschartigen Verbreiterung 42. Ferner ist der Fluidströmungsraum 66 nach außen hin im Wesentlichen von der Gehäusewand 44 begrenzt und nach innen hin von der Außenumfangsfläche der Filtermatte 20. Sofern ein Stützmantel oder ein Stützrohr 36 für die Filtermatte 20 zum Einsatz kommt, bildet die dahingehende Außenumfangsfläche die Begrenzung für den Fluidströmungsraum 66.

Bei dem Ausführungsbeispiel nach der Fig. 1 ist ein Fluidniveau 68 innerhalb des Vorratstanks 10 eingezeichnet und das Filterelement 18 und mithin der Fluidströmungsraum 66 liegen teilweise unter dem Niveau 68 und teilweise oberhalb desselben. In Abhängigkeit von der zuströmenden Fluidmenge über den Einlaufkanal 16 oder die abströmende für die Arbeitshydraulik benötigte Menge ändert sich das Fluidniveau 68 gegenüber der gezeigten Momentanposition in der Fig. 1. Der Fluidströmungsraum 66 ist im Übrigen von seinem Strömungsraum her bis auf den Durchgriff der einzelnen Haltestäbe 48 (vgl. Fig. 1) nicht beeinträchtigt.

Wie die Fig. 1a zeigt, die eine andere Längsschnittebene betrifft als die Fig. 1, aber ansonsten sich auf die im Wesentliche gleiche Filtervorrichtung beziehen soll, weist die Filtervorrichtung einzelne Verbindungsstäbe 70 auf, die der einfacheren Darstellung wegen in der Fig. 1 weggelassen wurden und von den insgesamt drei Verbindungsstäben 70 sind in der Fig. 1a nur zwei dargestellt. Die Verbindungsstäbe 70 sind endseitig mit dem Deckelteil 54 verbunden und liegen ansonsten an der oberen Endkappe 22 des Filterelementes 18 an, um dieses in der gezeigten Einbaulage zu halten. Insoweit besteht die Möglichkeit, durch Entfernen des Deckelteils 54 nur das auszutauschende Filterelement 18 aus dem Gehäuse 40 zu entfernen, das ansonsten in seiner Einbaulage an der oberen Tankwand 12 verbleibt. Andere Lösungsansätze sind hier möglich, beispielsweise in dem Sinne, dass bei fester Verbindung der Stege 70 mit dem Gehäuse 40 selbst dieses zusammen mit dem Filterelement 18 über das Deckelteil 54 bei Bedarf entnehmbar ist. In der Fig. 1a wurde der einfacheren Darstellung wegen gegenüber der Fig. 1 die Wände 12, 14 ebensowenig dargestellt wie die Festlegeschrauben 62, die die entsprechende Ausnehmungen 72 im Deckelteil 54 durchgreifen. Wie die Ausrichtung des Handgriffes 56 zeigt, ist die Darstellung nach der Fig. 1a um 90° aus der Zeichenebene gemäß der Darstellung nach der Fig. 1 herausgeschwenkt dargestellt.

Wie des Weiteren die Fig. 2 zeigt, die eine Außenansicht der Filtervorrichtung nach der Fig. 1 betrifft, sind in der Gehäusewand 44 fensterartige Durchlassöffnungen 74 vorhanden, die ringartig übereinander liegende und umfangsseitig umlaufende Gruppen ausbilden, wobei die beiden benachbarten Gruppen einen gleichen Axialabstand zueinander aufweisen und die einzelnen Durchlassöffnungen 74 innerhalb einer Gruppe weisen in radialer Richtung ebenfalls gleiche Abstandsmaße zueinander auf. Wie die Darstellung nach der Fig. 1 weiter zeigt, ist bei gegebenem Fluidniveau 68 die untere Gruppe an Durchlassöffnungen 74 vom Fluidniveau noch abgedeckt und die darüberliegende Gruppe an Durchlassöffnungen 74 endet an der Niveauoberseite ins Innere des Tanks 10 aus. Im vorliegenden Ausführungsbeispiel ist innerhalb der Gehäusewand 44 und an deren Innenseite anliegend eine Sieb- oder Gitterstrukturlage 76 angeordnet, die einen durchgehenden Zylindermantel bildet und alle gleich ausgebildeten fensterartigen Durchlassöffnungen 74 randseitig übergreift. Damit die Strukturlage 76 an der Innenseite der Gehäusewand 44 verbleibt, kann diese über eine nicht näher dargestellte Punktschweissung entsprechend festgelegt sein.

Anstelle einer einzigen Strukturlage 76 kann dem Grunde nach aber auch für jede Fensteröffnung 74 ein eigenständiges Gitter vorgesehen sein, das von der Innenseite her mit einem randseitigen Überstand die dahingehende Fensteröffnung dann abdeckt. Als Strukturlage 76 kann ein Streckmetallgitter dienen, aber auch ein sonstiges dünnmaschiges Gitter oder Netzwerk auch in Form einer Gewebestruktur mit Kett- und Schussfäden. Vorzugsweise weist die jeweils eingesetzte Strukturlage 76 für die Vielzahl an Durchlassstellen pro Durchlassstelle einen Öffnungsquerschnitt von weniger als einem Millimeter auf. Die Wahl der freien Öffnungsquerschnitte für die Durchlassstellen der Strukturlage hängt von Umgebungsbedingungen ab, wie der Viskosität des eingesetzten Fluids, insbesondere in Form des Hydrauliköls, die letztendlich auch mit von Umgebungstemperaturwerten abhängig ist. Die Fensteröffnungen 74 sind vorzugsweise in Rechteckform realisiert; andere Öffnungsgeometrien wären aber insoweit gleichfalls möglich.

Nimmt man nun die Filtervorrichtung nach den Fig. 1, 1A und 2 in Betrieb, durchströmt Fluid die Filtermatte 20 von innen nach außen und wird dabei abgereinigt. Da ein Teil des im Tank 10 bevorrateten Fluids, das unterhalb des Niveaus 68 sich befindet, in die unteren Durchlassöffnungen 74 einströmt, füllt sich insoweit der unterhalb des Niveaus 68 befindliche Einströmungsraum 66 mit Fluid mit der Folge, dass weiter von der Innenseite 32 her nachströmendes Fluid nach oben hin verdrängt wird, so dass eine filmartige Hohlsäule im Fluidströmungsraum 66 an Fluid entsteht, dass sich an der Innenseite der Gehäusewand 44 anlegt, sowie an den Durchlassstellen der insoweit perforierten Sieb- oder Gitterstrukturlage 76. Die dahingehend hochsteigende Fluidanordnung oberhalb des Fluidniveaus 68 tritt durch die Durchlassstellen in den fensterartigen Durchlasssöffnungen 74 aus, was weitgehend laminar erfolgt und Spritz- oder Aufschäumvorgänge während des Durchtritts sind insoweit mit Sicherheit vermieden. In Abhängigkeit der Fluidmengen und des Fluiddruckes, wie sie sich über den Fluidzulauf im Einlaufkanal 16 ergeben, kann der dahingehend laminare Fluidaustritt im Bereich des Fluidniveaus 68 stattfinden oder entsprechend darüberliegend. In Abhängigkeit der Volumengröße für den Fluidströmungsraum 66 kann bei entsprechend enger Radialauslegung, also bei geringem radialen Abstandsmaß, zur Außenseite des Filterelementes 18 für die Aufwärtsbewegung sich ein unterstützender Kapillareffekt mit einstellen.

In Abhängigkeit der Maschenweite für die Strukturlage 76 lassen sich die freien Öffnungsquerschnitte für die Durchlassstellen derart wählen, dass etwaig im gereinigten Fluid sich befindende Gasblasen, wie Luftblasen, an der derart perforierten Strukturlage 76 sich abscheiden, wobei für eine fluidniveaunahe Abgabe des Gases die Blasen an der Strukturlage 76 gesammelt und für eine erleichterte Abgabe unter dem Einfluss ihrer Oberflächenspannung im Volumen vergrößert werden, so dass diese ohne weiteres vergleichbar den CO₂-Perlen bei einem kohlesäurehaltigen Getränk aus der Filtervorrichtung heraus nach oben hin aufsteigen können, so dass insoweit das Fluid im Tank wirksam entgast ist. Da hydraulische Arbeitseinrichtungen häufig empfindlich gegen Gaseintrag sind, ist insoweit der dahingehenden Störungsgefahr wirksam begegnet.

Anstelle der in den Fig. 1, 1A und 2 gezeigten, bis auf die fensterartigen Öffnungen 74, geschlossene zylindrische Umfangswand 44 des Vorrichtungsgehäuses kann diese auch ganz oder größtenteils von einer zylindrischen Strukturlage 76 mit entsprechenden Durchlassstellen (nicht dargestellt) ersetzt sein. Gegebenenfalls ist die Strukturlage 76 mehrlagig auszuführen, damit ein steiferer Aufbau für die Gehäusewand 44 zustande kommt, um die auftretenden Druckunterschiede im Tank 10 sicher beherrschen zu können. Anstelle der gezeigten Ausführungsform für die einzelnen Durchlassstellen jeweils den gleichen freien Öffnungsquerschnitt vorzusehen, wäre bei dem dahingehend geänderten Aufbau auch denkbar, in Richtung der ansteigenden Fluidströmung im Fluidströmungsraum 66 den freien Öffnungsquerschnitt zu ändern, insbesondere gleichförmig zunehmen zu lassen, um so einen verbesserten Fluidanstieg im Fluidströmungsraum 66 zu erreichen.

Besonders bedeutsam ist jedoch, dass mit der erfindungsgemäßen Lösung ein homogenes laminares Abströmen des gereinigten Fluids von der Filtervorrichtung zurück in einen Tank möglich ist, ohne dass es zu Spritzeffekten oder zur ungewollten Schaumbildung kommen kann. Aufgrund der eingesetzten Strukturlagen mit den feinmaschigen Durchlassöffnungen ist darüber hinaus das Entgasungsverhalten verbessert und ein schädigender Lufteintrag in das Hydraulikmedium ist mit Sicherheit ausgeschlossen.

## Patentansprüche

1. Fluid-Vorratstank mit einer Filtervorrichtung, die in den Fluid-Vorratstank (10) eingebaut ist, mit mindestens einem austauschbaren Filterelement (18), das im Wesentlichen eine Art Kreiszylinder ausbildet, das von innen nach außen von einem Fluid durchströmbar ist, das eine Filtermatte (20) aufweist, die zur Aussteifung nach außen hin von einem Durchlassöffnungen aufweisenden Stützrohr oder Stützmantel (36) umfasst ist, und das jeweils unter Beibehalten eines vorgebbaren Radialabstandes und unter Bildung eines Fluidströmungsraumes (66) von einer Gehäusewand (44) eines Gehäuses (40) umgeben ist, die mehrere Durchlassstellen (74) aufweist, von denen ein Teil unterhalb eines jeweiligen veränderbaren Fluidniveaus (68) im Vorratstank (10) und der andere Teil oberhalb dieses Fluidniveaus (68) angeordnet ist, wobei das Gehäuse (40) an seiner Unterseite von einem Bodenteil (46) beschlossen ist und an seiner Oberseite eine flanschartige Verbreiterung (42) aufweist, mit der sich die Filtervorrichtung in diesem Bereich an der Oberseite einer oberen Tankwand (12) des Fluid-Vorratstanks (10) abstützt, wobei außenumfangsseitig zur Filtermatte (20) mit Stützrohr (36) Haltestäbe (48) angeordnet sind, die jeweils mit ihrem unteren Ende unter die Unterseite des Bodenteils (46) hervorragend, in diesem Bereich über eine Gewindemutter (50) verschraubt sind, wobei das obere Ende des jeweiligen Haltestabes (48) über ein entsprechendes Innengewinde in die flanschartige Verbreiterung (42) eingedreht ist, und wobei dergestalt unter einer vorgegebenen Vorspannung die Gehäusewand (44) zwischen der Verbreiterung (42) und dem Bodenteil (46) festgelegt ist,
wobei der Fluid-Vorratstank eine zugehörige Aufnahmewand (14) zum Festlegen der Filtervorrichtung aufweist,
wobei zwischen der oberen Tankwand (12) und der Aufnahmewand (14) ein Einlaufkanal (16) für verschmutztes Fluid verläuft, welcher in fluidischer Verbindung mit der Innenseite (32) des Filterelements steht, und
wobei die Filtervorrichtung ein Deckelteil (54) aufweist, welches eine absatzartige Verbreiterung (58) aufweist, die auf der Oberseite der Aufnahmewand (14) aufsteht, und welches den Ein- und Ausbau der Filtervorrichtung im Fluid-Vorratstank ermöglicht.

2. Fluid-Vorratstank nach Anspruch 1, **dadurch gekennzeichnet, dass** das Deckelteil (54) einen Handgriff (56) für den erleichterten Ein- und Ausbau der Filtervorrichtung in den Tank (10) aufweist.

3. Fluid-Vorratstank nach Anspruch 2, **dadurch gekennzeichnet, dass** der Absatz der Verbreiterung (58) des Deckelteils (54) in einen freien Innendurchmesser der Aufnahmewand (14) unter Anlage an dieselbe eingreift.

4. Fluid-Vorratstank nach Anspruch 3, **dadurch gekennzeichnet, dass** für eine Fluidabdichtung zwischen Aufnahmewand (14) und Deckelteil (54) ein ringförmiges Dichtelement (60) üblicher Bauart dient.

5. Fluid-Vorratstank nach einem der Ansprüche 3 bis 4, **dadurch gekennzeichnet, dass** diametral zur Längsachse (26) der Vorrichtung einander gegenüberliegende Festlegeschrauben (62) vorhanden sind, die dem Festlegen des Deckelteils (54) an der Aufnahmewand (14) dienen.

6. Fluid-Vorratstank nach einem der Ansprüche 2 bis 5, **dadurch gekennzeichnet, dass** konzentrisch zur Längsachse (26) der Vorrichtung ein Magnetstab (64) verläuft, der mit seinem oberen Ende am Deckelteil (54) festgelegt ist und der mit seinem anderen Ende die Innenseite (32) des Filterelements (18) durchgreift.

7. Fluid-Vorratstank nach einem der vorstehenden Ansprüche, **dadurch gekennzeichnet, dass** die innerhalb der Gehäusewand (44) angeordneten Durchlassstellen in Gruppen angeordnet oder in axialer Erstreckungsrichtung einen gleichen Abstand voneinander aufweisen.

## Claims

1. Fluid storage tank with a filter device that is installed in the fluid storage tank (10), with at least one replaceable filter element (18) that substantially forms a kind of circular cylinder through which a fluid can flow from the inside to the outside, comprising a filter mat (20), which, for stiffening purposes from the outside inwards, is enclosed by a support tube or support jacket (36) comprising through openings, and said filter element, in each case retaining a pre-definable radial distance and forming a fluid flow chamber (66), being surrounded by a housing wall (44) of a housing (40), said wall comprising a plurality of through points (74), some of which are arranged beneath a respective changeable fluid level (68) in the storage tank (10), while the remainder are arranged above this fluid level (68), wherein the housing (40) is terminated on its underside by a base part (46) and comprises a flange-like widening (42) on its upper side with which the filter device is supported in this region on the upper side of an upper tank wall (12) of the fluid storage tank (10), wherein holding rods (48) are arranged on the outer circumference of the filter mat (20) with the support tube (36), said rods, each protruding with their lower end beneath the lower side of the base part (46), being screwed in this region by means of a threaded nut (50), wherein the upper end of the respective holding rod (48) is screwed into the flange-like widening (42) by means of a corresponding inner thread, and wherein the housing wall (44) is fixed in such a way subject to a predefined pre-tensioning between the widening (42) and the base part (46),
wherein the fluid storage tank comprises an associated receiving wall (14) for fixing the filter device, an inlet channel (16) for contaminated fluid running between the upper tank wall (12) and the receiving wall (14), said channel being in fluidic connection with the inside (32) of the filter element, and wherein the filter device comprises a lid part (54), which comprises a step-like widening (58), which stands up on the upper side of the receiving wall (14), and which enables the filter device to be installed in and removed from the fluid storage tank.

2. Fluid storage tank according to claim 1, **characterised in that** the lid part (54) comprises a handle (56) for easier installation and removal of the filter device in the tank (10).

3. Fluid storage tank according to claim 2, **characterised in that** the step of the widening (58) of the lid part (54) engages in a free inner diameter of the receiving wall (14) in contact with said wall.

4. Fluid storage tank according to claim 3, **characterised in that** an annular sealing element (60) of the customary design is used to provide a fluid seal between the receiving wall (14) and the lid part (54).

5. Fluid storage tank according to any one of claims 3 to 4, **characterised in that** fixing screws (62) are provided lying diametrically opposite one another in relation to the longitudinal axis (26) of the device.

6. Fluid storage tank according to any one of claims 2 to 5, **characterised in that** a magnetic rod (64) extends concentrically in relation to the longitudinal axis (26) of the device, the upper end of said magnetic rod being fixed to the lid part (54) and passing through the inside (32) of the filter element (18) with its other end.

7. Fluid storage tank according to any one of the preceding claims, **characterised in that** the through points arranged inside the housing wall (44) are arranged in groups or are located an equal distance from one another in the axial direction of extension.

## Revendications

1. Réservoir à fluide ayant un dispositif de filtration, qui est incorporé au réservoir (10) à fluide, comprenant au moins un élément (18) de filtre remplaçable, qui est constitué sensiblement à la manière d'un cylindre de section droite circulaire, qui peut être traversé par un fluide de l'intérieur à l'extérieur, qui a une nappe (20) de filtre qui est enveloppé pour le raidissement vers l'extérieur, d'un tube d'appui ou d'une chemise (36) d'appui, ayant des ouvertures de passage, et qui est entouré, respectivement en conservant une distance radiale pouvant être donnée à l'avance et avec formation d'un espace (66) pour l'écoulement d'un fluide, d'une paroi (44) d'une enveloppe (40), qui a plusieurs points (74) de passage, dont une partie est disposée en-dessous d'un niveau (68) de fluide respectif, pouvant se modifier, dans le réservoir (10) et dont l'autre partie est disposée au-dessus de ce niveau (68) de fluide, dans lequel l'enveloppe (40) est fermée à son côté inférieur par une partie (46) de fond et a, à son côté supérieur, un élargissement (42) de type à bride, par lequel le dispositif de filtration s'appuie dans cette zone sur la face supérieure d'une paroi (12) supérieure du réservoir (10) à fluide, dans lequel, du côté du pourtour extérieur vers la nappe (20) de filtre, ayant le tube (36) d'appui, sont disposés des barreaux (48) de maintien qui, respectivement, par leur extrémité inférieure, en faisant saillie sous la face inférieure de la partie (46) du fond, sont vissés dans cette zone par un écrou (50) fileté, dans lequel l'extrémité supérieure du barreau (48) de maintien respectif est vissée par un taraudage correspondant, dans l'élargissement (42) de type à bride et dans lequel, ainsi, sous une précontrainte donnée à l'avance, la paroi (44) de l'enveloppe est fixée entre l'élargissement (42) et la partie (46) du fond,
dans lequel le réservoir à fluide a une paroi (14) de réception pour la fixation du dispositif de filtration,
dans lequel, entre la paroi (12) supérieure du réservoir et la paroi (14) de réception, s'étend un conduit (16) d'entrée de fluide pollué, qui est en communication fluidique avec le côté intérieur (32) de l'élément de filtre et
dans lequel le dispositif de filtration a une partie (54) formant couvercle, qui a un élargissement (58) de type à ressaut, qui s'applique au côté supérieur de la paroi (14) de réception et qui rend possible le montage et le démontage du dispositif de filtration dans le réservoir à fluide.

2. Réservoir à fluide suivant la revendication 1, **caractérisé en ce que** la partie (54) formant couvercle a une poignée (56) pour faciliter le montage et le démontage du dispositif de filtration dans le réservoir (10).

3. Réservoir à fluide suivant la revendication 2, **caractérisé en ce que** le ressaut de l'élargissement (58) de la partie (54) formant couvercle pénètre dans un diamètre intérieur libre de la paroi (14) de réception avec contact avec celle-ci.

4. Réservoir à fluide suivant la revendication 3, **caractérisé en ce qu'**un élément (60) annulaire d'étanchéité de type habituel sert à obtenir une étanchéité aux fluides entre la paroi (14) de réception et la partie (54) formant couvercle.

5. Réservoir à fluide suivant l'une des revendications 3 à 4, **caractérisé en ce qu'**il y a des vis (62) de fixation opposées l'une à l'autre diamétralement par rapport à l'axe (26) longitudinal du dispositif, qui servent à fixer la partie (54) formant couvercle à la paroi (14) de réception.

6. Réservoir à fluide suivant l'une des revendications 2 à 5, **caractérisé en ce que**, concentriquement à l'axe (26) longitudinal du dispositif, s'étend un barreau (64) magnétique, qui, par son extrémité supérieure est fixé à la partie (54) formant couvercle et qui, par son autre extrémité, traverse le côté (32) intérieur de l'élément (18) de filtre.

7. Réservoir à fluide suivant l'une des revendications précédentes, **caractérisé en ce que** les points de passage disposés à l'intérieur de la paroi (44) de l'enveloppe sont disposés en groupes ou sont équidistants dans la direction d'étendue axiale.
